(19) Europäisches Patentamt
European Patent Office
Office européen des brevets

(11) **EP 2 943 352 B1**

(12) **EUROPÄISCHE PATENTSCHRIFT**

(45) Veröffentlichungstag und Bekanntmachung des Hinweises auf die Patenterteilung:
**07.03.2018 Patentblatt 2018/10**

(51) Int Cl.:
*D21H 13/08* (2006.01)　　*B44C 1/10* (2006.01)
*D21H 13/24* (2006.01)　　*D21H 13/26* (2006.01)
*D21H 13/40* (2006.01)　　*D21H 19/44* (2006.01)
*D21H 19/72* (2006.01)

(21) Anmeldenummer: **14700955.9**

(22) Anmeldetag: **09.01.2014**

(86) Internationale Anmeldenummer:
**PCT/EP2014/000023**

(87) Internationale Veröffentlichungsnummer:
**WO 2014/108331 (17.07.2014 Gazette 2014/29)**

(54) **BESCHICHTUNGSSYSTEM**

COATING SYSTEM

SYSTÈME DE REVÊTEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.01.2013　DE 102013000333**

(43) Veröffentlichungstag der Anmeldung:
**18.11.2015　Patentblatt 2015/47**

(73) Patentinhaber: **Carl Freudenberg KG**
**69469 Weinheim (DE)**

(72) Erfinder:
• **SCHNEIDER, Ulrich**
**64297 Darmstadt (DE)**
• **ZAPLATILEK, Michael**
**69488 Birkenau (DE)**
• **VON DER MÜHLEN, Hartwig**
**69121 Heidelberg (DE)**
• **WAGNER, Rudolf**
**79379 Mülheim (DE)**
• **APPELGRÜN, Michael**
**79279 Vörstetten (DE)**

(56) Entgegenhaltungen:
EP-A2- 1 365 069　　　WO-A1-96/28610
WO-A1-2009/080772　　WO-A1-2012/074380
GB-A- 1 468 506

## Beschreibung

Die Erfindung betrifft die Verwendung eines Vliesstoffs als Trägermaterial zur Beschichtung, insbesondere der direkten Beschichtung, mit einem Überzug, insbesondere einer Lack und/oder Farbschicht.

Beschichtungssysteme aus Trägermaterialien und Lack- oder Farbschichten sind grundsätzlich bekannt. Durch die Aufbringung derartiger Systeme auf Oberflächen kann ein verbesserter Schutz der Oberfläche gegen mechanische Belastungen, wie zum Beispiel Schlag oder Biegung, gegen Beschädigung durch Abrieb, gegen Rissbildung infolge von Temperaturschwankungen und gegen Korrosion bei Kontakt mit aggressiven Chemikalien erzielt werden.

Die Verwendung von Beschichtungssystemen hat zudem verglichen mit der direkten Applikation von Lack- oder Farbschichten den Vorteil, dass diese Schichten beim Aufbringen auf die zu schützenden Oberflächen bereits ausgehärtet sind. So werden am Ort der Applikation keine Lösungsmittel freigesetzt. Zudem wird das Handling der beschichteten Materialien erleichtert, da Lack- und Farbschichten im noch nicht ausgehärteten Zustand üblicherweise sehr empfindlich gegenüber beispielsweise Stößen oder Verunreinigungen sind.

Als Trägermaterialien werden in der Technik üblicherweise Papiere eingesetzt, da diese eine gute Saugfähigkeit aufweisen und somit hohe Haftfestigkeiten erzielt werden können.

Nachteilig an der Verwendung von Papier ist jedoch, dass nur Papiere mit einer relativ großen Dicke und Steifigkeit eingesetzt werden können, da nur solche Papiere die geforderten mechanischen Eigenschaften, wie beispielsweise eine ausreichende Festigkeit, aufweisen. Papiere mit großer Dicke und Steifigkeit sind jedoch ungeeignet, um strukturierte Oberflächen und insbesondere kleine Radien abzubilden. Aus diesem Grund können sie oftmals nicht eingesetzt werden, wenn das beschichtete Trägermaterial auf ein Substrat mit strukturierter Oberfläche aufgebracht werden soll.

Aus dem Dokument WO 2012 074380 ist ein Beschichtungssystem bekannt, bei dem als Substrat für die direkte Applikation von Beschichtungen ein Vliesstoff oder Gewebe eingesetzt wird. Dieses Beschichtungssystem kann aufgrund der höheren Stabilität und Flexibilität der Substrate verglichen mit Papier auch zur Beschichtung von Materialien mit strukturierten Oberflächen eingesetzt werden. In diesem Dokument finden sich keine näheren Hinweise in Bezug auf die Art des einzusetzenden Vliesstoffs oder Gewebes. Praktische Versuche haben ergeben, dass die Lackhaftung auf den üblicherweise im Bereich der Oberflächenbeschichtung eingesetzten Vliesstoffen auf Basis von Polyester, Polyacrylnitril und Glasfasern nicht zufrieden stellend ist.

GB 1 468 506 A beschreibt ein dekoratives Blattmaterial in Form einer Rolle bestehend aus einem flexiblen, porösen Substrat, dessen dekorative Oberfläche mit einer flexiblen, ungehärteten Beschichtung eines säurehärtbaren Harzes versehen ist, das durch einen säurehaltigen Klebstoff härtbar ist, der auf die andere Oberfläche des flexiblen Blattmaterials aufgebracht wird, so daß, wenn das Blattmaterial abgerollt und an einer Wand oder einer anderen Oberfläche mittels des säurehaltigen Klebstoffs, der in diesem Stadium auf die andere Oberfläche des flexiblen Materials aufgebracht wird, die Beschichtung aushärtet. Geeignete säurehärtbare Harze umfassen Formaldehydkondensate von Amino- und Amidverbindungen, z.B. Harnstoff, Melamin, substituierte Melamine, Guanamin, Ethylenharnstoff und Thioharnstoff und die alkylierten Derivate dieser Kondensate. Andere geeignete Harze umfassen Acrylcopolymere, die Acrylamid und Methacrylamid enthalten, die mit Formaldehyd und alkylierten Derivaten dieser Kondensate kondensiert worden sind.

WO 96/26810 A1 beschreibt ein Verfahren zur Herstellung von Sicherheitspapier, welches ein Sicherheitsmerkmal umfasst. Das Verfahren umfasst die Herstellung von Papier in einem feuchten Zustand, welches ein oder mehrere Sicherheitsmerkmale umfasst sowie das anschließende Aufbringen einer Polyurethan Beschichtung auf eine oder beide Seiten des geleimten Papiers.

WO 2009/080772 A1 beschreibt ein Verfahren zum Herstellen eines dekorierten Laminats mit einem plattenförmigen Kern aus Holz oder Holzwerkstoff, einer Dekorschicht auf mindestens einer Seite des Kerns und einer Deckschicht mit Aminoplast auf der Dekorschicht, umfassend die Schritte: Bereitstellen des plattenförmigen Kerns, Befestigen eines Cellulosevlieses auf mindestens einer Seite des Kerns, Drucken des Dekors auf die freiliegende Seite des Cellulosevlieses, Anbringen von mindestens einer aushärtbaren Deckschicht auf dem gedruckten Dekor, Aushärten der aushärtbaren Schichten. Als Bindemittel werden in den Beispielen Harnstoff-Formaldehydharze genannt.

WO 2012/074380 A1 beschreibt ein Beschichtungssystem zum direkten Aufbringen einer Beschichtungsschicht auf ein Substrat, wobei das System eine Beschichtungsschicht auf Basis eines Materials aus einem gehärteten Polyester und/oder einem gehärteten Polyacrylat umfasst und wobei in das Material ein Trägergewebe integriert ist.

EP 1 365 069 A2 beschreibt ein Sicherheitspapier zur Herstellung von Wertdokumenten, wie Banknoten, Pässen, Ausweiskarten oder dergleichen, das zumindest teilweise mit einer Beschichtung versehen ist, die eine erhöhte Umlauffähigkeit gewährleistet. Die Beschichtung ist wenigstens auf einer der Oberflächen des Sicherheitspapiers vorgesehen und besteht aus einer Zusammensetzung, die lediglich ein Bindemittel und keine Füllstoffe enthält. Als Leimungsmittel wird in den Beispielen Melaminharz genannt.

EP 0707 977 A1 beschreibt ein gießbeschichtetes Papier für die Tintenstrahlaufzeichnung, umfassend in Laminierung: ein Basispapier, eine Unterbeschichtungsschicht, umfassend ein Pigment und ein Haftmittel, sowie eine gießbeschichtete Schicht, umfassend ein Harz, wobei das Pigment in der Unterbeschichtungsschicht Aluminiumoxidmit einer Schüttdichte von 0,05 bis 0,15 g/cm$^3$ umfaßt

Ausgehend von diesem Dokument liegt die der Erfindung zu Grunde liegende Aufgabe darin, einen Vliesstoff bereitzustellen, der als Trägermaterial zur Beschichtung, insbesondere der direkten Beschichtung, mit einem Überzug optimiert ist und der sich insbesondere dadurch auszeichnet, dass er eine hohe Haftung zu den verschiedensten Überzügen, insbesondere Lack- und/oder Farbschichten aufweist.

Diese Aufgabe wird gelöst durch die Verwendung eines Vliesstoffs mit einer spezifischen Oberfläche, gemessen nach DIN ISO 9277 von mindestens 0,15 m$^2$/g und einer Dicke von 10 bis 400 $\mu$m, umfassend Fasern mit einem Titer von weniger als 5 dtex in einer Menge von mindestens 30 Gewichtsprozent, bezogen auf das Gesamtgewicht des Vliesstoffs, wobei der Vliesstoff die folgenden hydrophilen Komponenten enthält:

- Fasern mit einer Oberflächenenergie, gemessen nach DIN 55660 von > 35 mN/m, und
- mindestens ein Bindemittel mit einer Oberflächenenergie, gemessen nach DIN 55660 von > 35 mN/m, ausgewählt aus der Gruppe der Acrylate, Vinylacrylate, Vinylacetate, Ethylenvinylacetate (EVA), Acrylnitrilbutadiene (NBR), Styrolbutadiene (SBR), Acrylnitrilbutadienstyrole (ABS), Vinylchloride, Ethylenvinylchloride, Polyvinylalkohole, Polyurethane, Stärkederivate, Zellulosederivate sowie deren Gemische und/oder Copolymere hiervon und gegebenenfalls
- mindestens einen Füllstoff mit einer Oberflächenenergie, gemessen nach DIN 55660 von > 35 mN/m

als Trägermaterial zur Beschichtung mit einem Überzug, insbesondere einer Lack-, Farbschicht und/oder einer Folie.

Überraschend wurde erfindungsgemäß gefunden, dass ein Vliesstoff, der die oben genannten Merkmale aufweist, eine hervorragende Haftung zu den verschiedensten Überzügen, insbesondere zu Lack- und/oder Farbschichten aufweist. Erfindungsgemäß wird unter dem Begriff "hydrophil" verstanden, dass die betreffende Komponente eine Oberflächenenergie gemessen nach DIN 55660 von > 35 mN/m aufweist.

Als hydrophile Fasern können die verschiedensten Fasern eingesetzt werden. Erfindungsgemäß besonders geeignet sind Fasern, die Zellulose, Viskose, Lyocel, Polyester, insbesonderere Polyethylentheraphtalat oder Polybutylentheraphtalat, Copolyester, (Co)Polyamid, insbesonderere Polyamid 6, Polyamid 6, 6, aliphatische und/oder aromatische Polyamide, Polyphenylensulfid, Glas, Basalt, Polyurethan, Polyimid, Melaminharz, Modacryl und/oder Polyacrylnitril enthalten sofern diese eine Oberflächenenergie gemessen nach DIN 55660 von > 35 mN/m aufweisen.

Werden Polyester eingesetzt, so sind aromatische Polyester bevorzugt, da diese bessere mechanische und thermische Eigenschaften als aliphatische Polyester haben. Vorzugsweise enthalten die Fasern die vorgenannten Materialien in einer Menge von 50-100 Gew.%, noch bevorzugter 60-100 Gew.%. Besonders bevorzugt bestehen die Fasern aus den vorgenannten Materialien. Sofern die Fasern Gemische der vorgenannten Materialien enthalten, so können diese beispielsweise in Form von Blends und/oder Copolymeren vorliegen.

Als besonders geeignet haben sich Fasern erwiesen, die Zellstoff enthalten, insbesondere hydrophile Naturfasern, wie Holzfasern, Bastfasern, insbesondere Hanffasern, Flachsfasern, Kenaffasern, Ramiefasern, Jutefasern, Sisalfasern, Kokosnussfasern und/oder Baumwollfasern.

Gemäß einer bevorzugten Ausführungsform der Erfindung enthalten die Fasern ein Gemisch aus Synthesefasern und Naturfasern. Dabei liegen die Naturfasern vorzugsweise in gemahlener Form, beispielsweise als Faserpulp, vor. Der Anteil an Synthesefasern und Naturfasern kann dabei in Abhängigkeit von dem gewünschten Eigenschaftsprofil variieren. Gute Ergebnisse werden in der Regel mit einer Einstellung der Mengenverhältnisse zwischen natürlichen und synthetischen Fasern von 9 zu 1 bis 1 zu 9 erzielt.

Der Anteil der hydrophilen Fasern im Vliesstoff beträgt vorzugsweise von 20 Gew.% bis 100 Gew.%, vorzugsweise von 30 Gew.% bis 80 Gew.%, bezogen auf das Gesamtgewicht des Vliesstoffs. Zweckmäßigerweise bilden die hydrophilen Fasern, wenn vorhanden, zumindest teilweise den im erfindungsgemäßen Vliesstoff vorgesehenen Anteil an Fasern mit einem Titer von weniger als 5 dtex. Der Anteil an Fasern mit einem Titer von weniger als 5 dtex beträgt erfindungsgemäß mindestens 30 Gewichtsprozent, bezogen auf das Gesamtgewicht des Vliesstoffs. Gemäß einer bevorzugten Ausführungsform der Erfindung beträgt der Anteil an Fasern mit einem Titer von weniger als 5 dtex 50-100 Gew.%, vorzugsweise 60-100 Gew.%, bezogen auf das Gesamtgewicht des Vliesstoffs.

Als hydrophile Bindemittel können die verschiedensten Bindemittel eingesetzt werden, ausgewählt aus der Gruppe der Acrylate, Vinylacrylate, Vinylacetate, Ethylenvinylacetate (EVA), Acrylnitrilbutadiene (NBR), Styrolbutadiene (SBR), Acrylnitrilbutadienstyrole (ABS), Vinylchloride, Ethylenvinylchloride, Polyvinylalkohole, Polyurethane, Stärkederivate, Zellulosederivate sowie deren Gemische und/oder Copolymere, sofern diese eine Oberflächenenergie gemessen nach DIN 55660 von > 35 mN/m aufweisen.

Der Anteil des hydrophilen Bindemittels im Vliesstoff beträgt vorzugsweise 0-90 Gew.%, noch bevorzugter 5-50 Gew.%, noch bevorzugter 10-30 Gew.% noch bevorzugter 15-25 Ges.%, bezogen auf das Gesamtgewicht des Vliesstoffs.

Als hydrophile Füllstoffe können die verschiedensten Füllstoffe eingesetzt werden. Erfindungsgemäß besonders geeignet sind Füllstoffe, ausgewählt aus der Gruppe bestehend aus Carbonaten, Silikaten, Sulfaten, Boraten, Phosphaten sowie Metallen und ihren Oxiden, Rußen, Gläsern, Polymerpartikeln, gemahlenen Fasern (synthetisch und natürlich) und / oder organischen, anorganischen Pigmenten, Farbpigmenten, (nicht-)ionischen Tensiden, UV Stabilisatoren, Bioziden, sofern diese eine Oberflächenenergie gemessen nach DIN 55660 von > 35 mN/m aufweisen.

Der Anteil der hydrophilen Füllstoffe im Vliesstoff beträgt vorzugsweise von 0% bis 90 Gew-%, noch bevorzugter von 5-50 Gew.%, noch bevorzugter von 10-30 Gew.%, noch bevorzugter von 15-25 Gew.%.

Erfindungsgemäß enthält der Vliesstoff hydrophile Fasern, hydrophiles Bindemittel und gegebenenfalls hydrophile Füllstoffe mit einer OberFlächenenergie, gemessen nach DIN 55660 von mindestens 35 mN/m. Gemäß einer besonders bevorzugten Ausführungsform der Erfindung weisen die hydrophilen Fasern, Bindemittel und / oder Füllstoffe eine Oberflächenenergie, gemessen nach DIN 55660 von 35 mN/m bis 300 mN/m, vorzugsweise von 35 mN/m bis 200 mN/m, noch bevorzugter von 35 mN/m bis 150 mN/m, und insbesondere von 35 mN/m bis 75 mN/m auf.

Der im erfindungsgemäßen Verfahren eingesetzte Vliesstoff weist eine spezifische Oberfläche, gemessen nach DIN ISO 9277 von mindestens 0,15 m$^2$ auf. Besonders gute Hafteigenschaften werden erhalten, wenn der Vliesstoff eine spezifische Oberfläche, gemessen nach DIN ISO 9277 von 0,15 m$^2$ bis 1,5 m$^2$, noch bevorzugter von 0,2 bis 1,5 m$^2$ und insbesondere von 0,25 bis 1,5 m$^2$ aufweist.

Die hydrophilen Fasern, Bindemittel und/oder Füllstoffe können gleichmäßig oder ungleichmäßig im Vliesstoff verteilt sein sofern eine ausreichende Menge an hydrophilen Fasern und/oder Füllstoffen an der für die Beschichtung vorgesehenen Oberfläche des Vliesstoffs vorhanden ist. Vorzugsweise liegen die Fasern, Bindemittel und/oder Füllstoffe gleichmäßig im Vliesstoff verteilt vor.

Erfindungsgemäß besonders bevorzugt ist der Einsatz von hydrophilen Fasern als hydrophile Komponente.

Der Begriff Vliesstoff wird erfindungsgemäß im herkömmlichen Sinne verstanden. So wird unter einem Vliesstoff ein textiles Flächengebilde aus Fasern endlicher oder unendlicher Länge verstanden, die chemisch, thermisch oder mechanisch miteinander verbunden sind. Im Gegensatz dazu werden Gewebe, Gestricke und Gewirke aus Garnen hergestellt und Membranen aus Folien.

Die für die Herstellung des Vliesstoffs eingesetzten Fasern, insbesondere die hydrophilen Fasern, können Stapelfasern, die eine Länge von 30 bis 80 mm, vorzugsweise von 30 bis 70 mm, noch bevorzugter von 30 bis 60 mm, aufweisen können, Kurzschnittfasern und/oder Filamente sein. Vorzugsweise werden zur Herstellung des Vliesstoffs Kurzschnittfasern einer Länge von 1 mm bis 30 mm, vorzugsweise von 1 mm bis 25 mm, insbesondere von 1 mm bis 20 mm, eingesetzt. Die Querschnitte der verwendeten Fasern können runde, kantige, lobale, bändchenartige, ovale, hohle, Kern-Mantel oder andere denkbare Querschnitte haben. Die Fasern können zuvor zwecks weiterer Fibrillierung einem Refining oder Mahlprozess unterzogen worden sein. Ganz besonders bevorzugt ist die Verwendung von Faserpulp. Gemäß einer besonders bevorzugten Ausführungsform der Erfindung wird zur Herstellung des Vliesstoffs Faserpulp, gegebenenfalls in Kombination mit anderen Kurzschnittfasern eingesetzt. Der Anteil an Faserpulp in der Fasermischung und/oder im Vliesstoff beträgt vorzugsweise 10-70 Gewichtsprozent, noch bevorzugter 20-60 Gewichtsprozent, bezogen auf das Gesamtgewicht des Vliesstoffs. Gemäß einer besonders bevorzugten Ausführungsform der Erfindung beträgt der Mahlgrad des Faserpulps nach Schopper-Riegler 10-60°SR, vorzugsweise 10-50°SR.

Vorteilhaft an der Verwendung von Stapelfasern als Basismaterial verglichen mit Filamenten ist, dass Vliesstoffe erhalten werden können, die eine höhere Homogenität haben. Eine hohe Homogenität ist aber für den erfindungsgemäßen Einsatz als Trägermaterial zur Beschichtung mit einem Überzug, insbesondere einer Lack-, Farbschicht und/oder einer Folie wesentlich, da sie ein gleichmäßiges Beschichtungsergebnis ermöglicht.

Insbesondere bei Lackschichten ist ein gleichmäßiges Beschichtungsergebnis ein "KO-Kriterium".

Für die Herstellung des Vliesstoffs können auch weitere, nicht hydrophile Fasern zur Bildung der Fasermatrix eingesetzt werden, beispielsweise Polyolefine, insbesondere aliphatische und/oder aromatische Polyolefine. Diese können als Monofilamente oder Bikomponentenfasern vorliegen und die gleiche Faserlänge und/oder Fasertiter wie die hydrophilen Fasern aufweisen. Vorzugsweise liegen die nicht hydrophilen Fasern im Vliesstoff in einer Menge von bis zu 40 Gew.%, vorzugsweise von 5-30 Gew.%, bezogen auf das Gesamtgewicht des Vliesstoffs vor.

Als ebenfalls vorteilhaft hat sich erwiesen, wenn die Fasern, insbesondere die hydrophilen Fasern, einen geringen mittleren Faserdurchmesser aufweisen. So können mit Vliesstoffen, deren mittlerer Faserdurchmesser, gemessen nach DIN 53811, von 0,1 bis 25 $\mu$m, vorzugsweise 1 bis 25 $\mu$m, beträgt, besonders gute Haftfestigkeiten erzielt werden.

Besonders gute Ergebnisse werden erzielt, wenn der Anteil der Fasern, insbesondere der hydrophilen Fasern, die einen mittleren Faserdurchmesser, gemessen nach DIN 53811 von 0,1 bis 25 $\mu$m, vorzugsweise von 1 bis 25 $\mu$m, aufweisen, mindestens 50 Gew.% vorzugsweise 80-100 Gew.%, bezogen auf die Gesamtmenge an Fasern im Vliesstoff, beträgt.

Gemäß einer weiteren bevorzugten Ausführungsform der Erfindung wird der Vliesstoff durch chemische Bindungen, insbesondere durch das Verfestigen eines Vlieses mittels eines Bindemittels hergestellt. Der Binderauftrag kann mittels Tränkung, Streichen, Drucken, Pflatschen oder Sprühen erfolgen. Als Binder werden, wie oben dargelegt, vorzugsweise hydrophile Polymere, insbesondere Acrylate, Vinylacrylate, Vinylacetate, Ethylenvinylacetate (EVA), Acrylnitrilbutadiene (NBR), Styrolbutadiene (SBR), Acrylnitrilbutadienstyrole (ABS), Vinylchloride, Ethylenvinylchloride, Polyvinylalkohole, Polyurethane, Stärkederivate, Zellulosederivate sowie deren Copolymere und/oder Gemische hiervon eingesetzt.

Die Verwendung des Bindemittels hat den Vorteil, dass sie die Hydrophilie der Vliesstoffoberfläche und somit dessen Haftfähigkeit erhöhen kann. Darüber hinaus stellt das Bindemittel eine Barriere dar, die einer Durchdringung des Vliesstoffs mit dem Überzugmaterial, beispielsweise einem Lack oder einer Farbe entgegenwirkt.

Gemäß einer weiteren bevorzugten Ausführungsform der Erfindung wird der Vliesstoff nach seiner Herstellung mit einem Bindemittel imprägniert. Hierdurch kann einer Durchdringung des Vliesstoffs mit dem Überzugsmaterial noch effektiver entgegengewirkt werden.

Die für die nachträgliche Imprägnierung des Vliesstoffs eingesetzten Bindemittel können die gleichen sein, wie die für die Verfestigung des Vliesstoffs beschriebenen. Zu diesem Zweck können aber auch andere Bindemittel eingesetzt werden. Insgesamt wurde gefunden, dass Acrylate, Vinylacrylate, Vinylacetate, Ethylenvinylacetate (EVA), Acrylnitrilbutadiene (NBR), Styrolbutadiene (SBR), Acrylnitrilbutadienstyrole (ABS), Vinylchloride, Ethylenvinylchloride, Polyvinylalkohole, Polyurethane, Stärkederivate, Zellulosederivate sowie deren Copolymere und/oder Gemische im Hinblick auf ihre Hydrophilie sowie Barrierefunktion besonders geeignet sind.

Die vorgenannten Bindemittel werden vorzugsweise in Form von Suspensionen, die beispielsweise Feststoffgehalte von 5 Gew.% bis 60 Gew.%, vorzugsweise von 10 Gew.% bis 55 Gew.%, noch bevorzugter von 20 Gew.% bis 50 Gew.% aufweisen, eingesetzt. Dabei können die Bindemittel in thermoplastischer und/oder vernetzbarer Ausführung eingesetzt werden und gegebenenfalls Füllstoffe enthalten.

Die zur Imprägnierung eingesetzten Mengen des Bindemittels können in Abhängigkeit von der erwünschten Barrierefunktion variieren. Vorzugsweise wird der Vliesstoff mit Bindemittel in einer Menge von 5 % bis 80%, vorzugsweise von 10% bis 70%, jeweils bezogen auf das Gesamtgewicht des Vliesstoffs, imprägniert.

Gemäß einer weiteren bevorzugten Ausführungsform der Erfindung wird der Vliesstoff thermisch verfestigt. Zu diesem Zweck kann der Vliesstoff Bindefasern, beispielsweise Monofilament- oder Bikomponentenfasern enthalten. Vorzugsweise besteht die thermoplastische Bindekomponente der Bindefasern aus Polymeren mit einem Schmelzpunkt, der mindestens 10°C, vorzugsweise mindestens 15°C, unterhalb des Schmelzpunktes der Matrixfasern liegt. Der Anteil der Bindekomponente beträgt vorzugsweise 5 - 50 Gew.%, noch bevorzugter 10 - 45 Gew.%, insbesondere 15 - 40 Gew.%, jeweils bezogen auf das Gesamtgewichts des Vliesstoffes. Besonders bevorzugt besteht die Bindekomponente aus (Co-) Polyestern, Polybutylenterephtalat oder (Co-) Polyamiden, insbesondere Polyamid 6 oder Polyurethanen oder Polyolefinen, insbesondere Polyethylenen, wie Polypropylen und/oder Gemischen hiervon. Die Bindefasern können hydrophile Fasern im Sinne der Erfindung sein. Vorteilhaft hieran ist, dass mit ihnen die Hydrophilie des Vliesstoffs erhöht werden kann. Denkbar ist jedoch auch anstelle von oder zusätzlich zu hydrophilen Bindefasern nicht hydrophile Bindefasern, beispielsweise Polyolefine, einzusetzen. Bei dieser Ausführungsform ist vorteilhaft, dass die nicht hydrophilen Bindefasern einer Durchdringung des Vliesstoffs mit dem Überzugsmaterial entgegenwirken.

Zur Herstellung des Vliesstoffs kann eine Faserlegung auf die verschiedensten dem Fachmann bekannten Arten und Weisen, erfolgen. So können erfindungsgemäß trockengelegte Vliesstoffe, Nassvliesstoffe und/oder Spinnvliesstoffe eingesetzt werden.

Praktische Versuche haben ergeben, dass Vliesstoffe mit besonders guten Haftungseigenschaften erhalten werden können, wenn der Vliesstoff ein Nassvliesstoff ist. Darüber hinaus zeichnen sich Nassvliesstoffe bei der erfindungsgemäßen Verwendung dadurch aus, dass sie eine sehr dichte, gleichmäßige Struktur und eine isotrope Faserverteilung haben. Dies ist vorteilhaft, weil hierdurch eine besonders gleichmäßige Beschichtung der Oberfläche ermöglicht wird. Vorteilhaft ist zudem dass Gemische von Fasern einsetzbar sind, so dass auf einfache Weise die Struktur und Beschaffenheit der Oberfläche gezielt eingestellt werden kann.

Zur Herstellung des Nassvliesstoffs werden vorzugsweise Kurzschnittfasern, die insbesondere eine Länge von 0,01 mm bis 30mm, vorzugsweise von 0,01 bis 25 mm aufweisen, gegebenenfalls im Gemisch mit weiteren Fasern, eingesetzt. Gemäß einer besonders bevorzugten Ausführungsform der Erfindung wird zur Herstellung des Nassvliesstoffs Faserpulp, gegebenenfalls in Kombination mit anderen Kurzschnittfasern eingesetzt. Der Anteil an Faserpulp in der Fasermischung und/oder im Vliesstoff beträgt vorzugsweise 10-70 Gew.%, noch bevorzugter 20-60 Gew.%, jeweils bezogen auf das Gesamtgewicht des Vliesstoffs. Gemäß einer bevorzugten Ausführungsform der Erfindung beträgt der Mahlgrad des Faserpulps nach Schopper-Riegler 10-60°SR, vorzugsweise 10-50°SR.

Die Legung des Faserflors erfolgt bekannterweise derart, dass zunächst die Fasern in großer Verdünnung in Wasser dispergiert und anschließend auf einem Schrägsieb abgelegt werden. Daraufhin wird der Faserflor vorzugsweise thermisch oder chemisch gebunden.

Durch die erfindungsgemäße Verwendung eines großen Anteils an Fasern mit einem niedrigen Fasertiter ist es möglich eine Porengrößenverteilung zu erzielen, die ein Verteilungsmaximum zwischen 2,5-50 $\mu$m, vorzugsweise 2,5-40 $\mu$m, insbesondere 2,5-30 $\mu$m, aufweist. So zeichnet sich die Porengrößenverteilung des erfindungsgemäßen Vliesstoffs, gemessen nach ASTM E 1294, vorzugsweise dadurch aus, dass 80-100 % der Poren einen Durchmesser von 2,5-50 $\mu$m, vorzugsweise 2,5-40 $\mu$m, insbesondere 2,5-30 $\mu$m haben. Ohne sich erfindungsgemäß auf einen Mechanismus festzulegen, wird vermutet, dass die spezielle Porengrößenverteilung wesentlich zu der guten Haftfähigkeit des Vliesstoffs beiträgt.

Die Porengrößenverteilung des Vliesstoffs wird somit wesentlich durch den hohen Anteil der Fasern mit einem Fasertiter von weniger als 5 dtex beeinflusst, wobei diese Fasern vorzugsweise hydrophile Fasern sind. Praktische Versuche haben ergeben, dass besonders gute Haftfähigkeiten erhalten werden können, wenn Fasern mit einem Fasertiter von 0,1 bis 5 dtex, noch bevorzugter von 0,1 bis 4 dtex, insbesondere von 0,1 bis 3,3 dtex, eingesetzt werden. Hierbei können die hydrophilen Fasern und/oder die weiteren Fasern diese Fasertiter aufweisen wobei es bevorzugt ist, dass die hydrophilen Fasern diese Fasertiter aufweisen.

Gemäß einer besonders bevorzugten Ausführungsform der Erfindung werden Vliesstoffe eingesetzt, die eine vergleichsweise hohe Packungsdichte haben. Die Packungsdichte ist eine Vliesstoffeigenschaft, die sich umgekehrt proportional zur Porosität und/oder der Luftdurchlässigkeit verhält. Im Vliesstoff geht eine hohe Packungsdichte einher mit einer niedrigen Luftdurchlässigkeit bzw. einer niedrigeren Porosität. Eine hohe Packungsdichte bzw. eine geringe Porosität und/oder Luftdurchlässigkeit kann beispielsweise dadurch erhalten werden, dass die Vliesstoffe mittels Druck und Temperatur stark verdichtet werden.

Die Packungsdichte $\alpha$ eines Vliesstoffes ist definiert als das Verhältnis zwischen dem mittleren Volumen des den Vliesstoff aufbauenden Feststoffes (Festkörper) und dem Volumen des Vliesstoffes und errechnet sich nach:

$$\alpha = \frac{m_{Vlies} / \rho_{Festkörper}}{V_{Vlies}} = \frac{\rho_{Festkörper}}{\rho_{Vlies}}$$

$\alpha$ = Packungsdichte

$\rho$ = mittlere Dichte Festkörper, bzw. Vliesstoffe

Vorzugsweise weisen die Vliesstoffe eine Packungsdichte von mindestens 0,1, vorzugsweise von 0,12 bis 0,8 noch bevorzugter von 0,15 bis 0,6 auf, und/oder eine Luftdurchlässigkeit, gemessen nach EN ISO 9237 bei einem Differenzdruck von 200 Pa von höchstens 7000 l/m$^2$s, vorzugsweise von 1000 l/m$^2$s bis 2 l/m$^2$s, noch bevorzugter von 800 l/m$^2$s bis 20 l/m$^2$s.

Die Verwendung derartiger Vliesstoffe hat den Vorteil, dass verglichen mit Vliesstoffen einer höheren Porosität bzw. Luftdurchlässigkeit geringere Mengen an Überzugsmaterial notwendig sind um zu einem gleichmäßigen Beschichtungsergebnis zu kommen. Ansonsten kommt der Vliesstoff ggf. auf der Sichtseite zum Vorschein.

Um ein möglichst gleichmäßiges Beschichtungsergebnis zu erhalten, hat es sich ferner als zweckmäßig erwiesen Vliesstoffemit einer hohen Glätte zu verwenden. Besonders bevorzugt werden Vliesstoffe eingesetzt, die gemäß DIN 53107 bei - 48 kPa eine Glätte, von mindestens 0,5 s haben.

Insbesondere aber eignen sich Vliesstoffe mit einer Glätte von 5 bis 200 s, vorzugsweise von 8 bis 170 s.

Der Anteil an Fasern mit einem Fasertiter von weniger als 5 dtex beträgt erfindungsgemäß mindestens 30 Gew.%, bezogen auf das Gesamtgewicht des Vliesstoffs. Vorzugsweise beträgt der Anteil der Fasern mit einem Fasertiter von weniger als 5 dtex von 0,1 bis 5 dtex, noch bevorzugter von 0,1 bis 4 dtex, noch bevorzugter von 0,1 bis 3,3 dtex, 40 bis 100 Gew.%, noch bevorzugter 50 bis 100 Gew.%, jeweils bezogen auf das Gesamtgewicht des Vliesstoffs, wobei diese Fasern vorzugsweise hydrophil sind.

Der erfindungsgemäße Vliesstoff zeichnet sich ferner durch eine kurze spezifische Benetzungszeit für Wasser aus. Diese kann wie folgt unter Standardbedingungen (23°C, 1 bar) gemessen werden: Man plaziert das zu testende Muster Vliesstoff zentriert auf einem Metallring von 10 cm Durchmesser. Hierbei ist darauf zu achten, dass das Muster eine Größe von DIN A5 hat und das Flächengewicht des Vliesstoffs in einem Bereich von 10 - 200 g/m$^2$ liegt. Die Dicke des Rings, d.h. der Abstand zwischen Vlies und Auflageebene, ist dabei so zu wählen, dass der Vliesstoff während der gesamten Messzeit keinen Kontakt zu der darunter liegenden Oberfläche hat also mind. 0,3 cm beträgt. Nun setzt man vorsichtig einen Tropfen 50 $\mu$l VE-Wasser mittels einer Eppendorfpipette (Applikationsvolumen 20 - 200 $\mu$l, 200 $\mu$l Pipettenspitzen) in die Mitte des Musters (zentriert). Hierbei ist darauf zu achten, dass einerseits die Pipettenspitze den Vliesstoff nicht berührt, der Tropfen also nicht in das Vlies injiziert wird. Andererseits ist es wichtig, dass der Tropfen auf das Vlies gesetzt wird also nicht fällt. Nun wird der Zeitraum gemessen, den der Vliesstoff benötigt, um den Wassertropfen vollständig aufzusaugen.

Im Figur 1 ist eine Versuchsanordnung exemplarisch wiedergegeben. In der Zeichnung zeigen die Bezugszeichen 1-6 folgendes:

1. Arbeitsoberfläche
2. Vlies
3. Metallring
4. Abstand Vlies - Arbeitsoberfläche, mind. 3mm

5 Wassertropfen (50 µl)

6 Wasserfluss

Praktische Versuche haben ergeben, dass es die erfindungsgemäßen Vliesstoffe ermöglichen bei der oben beschriebenen Vorgehensweise Benetzungszeiten von weniger als 20 min, vorzugsweise von weniger als 15 min, noch bevorzugter von weniger als 10 min zu erzielen. Dies zeigt, dass diese Vliesstoffe besonders gute Haftfestigkeiten sowie ein besonders gleichmäßiges Beschichtungsbild ermöglichen.

Die erfindungsgemäßen Vliesstoffe zeichnen sich vorzugsweise durch eine Festigkeit, gemessen nach DIN ISO 9073-1, von mindestens 10 N/5cm, vorzugsweise von 10 N/5cm bis 400 N/5cm, noch bevorzugter von 20 N/5cm bis 300 N/5cm und insbesondere von 20 N/5cm bis 200 N/5cm in Längsrichtung aus.

Die erfindungsgemäßen Vliesstoffe zeichnen sich ferner vorzugsweise durch eine Dehnung, gemessen nach DIN ISO 9073-1, von 5% bis 75%, vorzugsweise von 5% bis 70 % und insbesondere von 5% bis 65 % in Längsrichtung aus.

Die erfindungsgemäßen Vliesstoffe zeichnen sich ferner vorzugsweise durch eine Weiterreißkraft in Längsrichtung, gemessen nach DIN 53356, von 0,1 bis 30 N, vorzugsweise von 0,2 N bis 15 N aus.

Um sicherzustellen, dass eine optimale Haftung zwischen Vliesstoff und Überzug zustande kommt, ist es vorteilhaft, wenn der Vliesstoff eine gewisse Mindestdicke aufweist, um ein Durchdringen des Vliesstoffs mit dem Überzugsmaterial zu verhindern. Gute Ergebnisse werden in dieser Hinsicht mit Vliesstoffen einer Dicke von 10 bis 400 µm, noch bevorzugter von 10 bis 250 µm und insbesondere zwischen 10 und 100µm, erzielt. Als ebenfalls vorteilhaft hat es sich erwiesen, wenn der Vliesstoff ein Flächengewicht, gemessen nach DIN ISO 9073-1, von 10 bis 200 g/m$^2$, noch bevorzugter von 10 bis 150 g/m$^2$ und insbesondere von 10 - 100 g/m$^2$ aufweist.

Bei der Einstellung der mittleren Dicke (gemessen analog zu DIN 9073-2 bei einer Auflagefläche von 10 cm$^2$, einem Auflagedruck von 1,25 kPa und einer Dauer von 1s) bzw. des Flächengewichts des Vliesstoffs ist zu berücksichtigen, dass einem Durchdringen des Vliesstoffs mit dem Überzugsmaterial auch dadurch entgegengewirkt werden kann, dass der Vliesstoff mit einer hohen Packungsdichte bzw. geringen Porosität ausgestattet wird. Dies ermöglicht es den Vliesstoff dünner auszugestalten, was eine preisgünstigere Fertigung erlaubt.

Praktische Versuche haben gezeigt, dass bei Einstellung einer Packungsdichte im Bereich von 0,12 bis 0,8 vergleichsweise dünne Produkte erhalten werden können, die beispielsweise eine mittlere Dicke im Bereich von 10 µm bis 250 µm, insbesondere 10 - 100 µm aufweisen und mit denen dennoch gute Beschichtungsergebnisse erhalten werden können.

Gemäß einer weiteren bevorzugten Ausführungsform der Erfindung werden die Materialien für die Herstellung des Vliesstoffs so ausgewählt, dass er nur einen geringen Schrumpf hat, der vorzugsweise kleiner 5 %, gemessen bei 200 °C ist (s. Beispiel 11). Zu diesem Zweck hat sich die Verwendung von aromatischen Polyestern zur Herstellung des Vliesstoffs als besonders geeignet erwiesen insbesondere in Kombination mit Zellstoffpulp.

Neben den hydrophilen Fasern kann der Vliesstoff auch weitere nicht hydrophile Fasern enthalten. Wie oben erwähnt können als nicht hydrophile Fasern thermoplastische Binderfasern, beispielsweise Polyolefin, wie Polyethylen oder Polypropylen, eingesetzt werden. Die nicht hydrophilen Fasern können beispielsweise in einer Menge von 1 bis 30 Gew.%, vorzugsweise von 1 bis 20 Gew.%, und insbesondere von 1 bis 10 Gew.%, bezogen auf das Gesamtgewicht des Vliesstoffs im Vliesstoff enthalten sein.

In Abhängigkeit von dem vorgesehenen Einsatz kann der Vliesstoff mit einer Flammschutz-, Fungizid-, Insektizid-, Biozid-, Korrosionsschutz-, UV-, Säureschutz-, und/oder magnetischen Ausrüstung versehen werden. Ebenfalls denkbar ist, dass der Vliesstoff mit einer Ausrüstung versehen wird, die seine elektromagnetische Verträglichkeit erhöht und/oder, dass er mit einem Hydrophilierungs- oder Hydrophobierungsmittel behandelt wird. Durch eine Behandlung mit einem Hydrophilierungs- oder Hydrophobierungsmittel kann die Haftung, Verriegelung beziehungsweise das Einsinken des Überzugs selektiv gesteuert werden, indem die Oberflächenspannung des Vliesstoffs erhöht oder erniedrigt wird. Gemäß einer bevorzugten Ausführungsform der Erfindung wird der Vliesstoff jedoch keiner Vorbehandlung, insbesondere keiner Behandlung mit einem Haftvermittler und/oder einem Netzmittel unterzogen. Erfindungsgemäß wurde nämlich gefunden, dass der erfindungsgemäße Vliesstoff auch ohne Vorbehandlung eine hervorragende Haftung zu den verschiedensten Überzügen, insbesondere zu Lack- und/oder Farbschichten aufweist. Somit ist es erfindungsgemäß möglich auf eine Vorbehandlung des Vliesstoffs zu verzichten, was eine einfachere und kostengünstigere Verfahrensführung ermöglicht.

Auch denkbar ist, dass der Vliesstoff einer Fluorierungs-, Grafting-, Plasma -, Corona - und/oder Beflammungsbehandlung unterzogen wird. Schließlich ist auch denkbar, dass der Vliesstoff mit einer Ausrüstung versehen wird, die als Sperrschicht gegen austretende Substanzen fungiert. Darüber hinaus kann der Vliesstoff und/oder der Überzug zu dekorativen Zwecken Farbstoffe und/oder Pigmente enthalten. Diese können auch dazu dienen IR-Strahlung zu reflektieren. Um den Wärmedurchfluss weiter oder alternativ zu reduzieren können auch Hohlfasern oder isolierende Zusatzstoffe wie z.B. Aerogele verwendet werden.

Wie oben erläutert, eignet sich der erfindungsgemäße Vliesstoff hervorragend als Trägermaterial zur Beschichtung mit einem Überzug. So können auf den Vliesstoff die verschiedensten Überzüge, beispielsweise Lack- und/oder Farbschichten, appliziert und Beschichtungssysteme mit einer guten Verbundhaftung erhalten werden. Die Überzugsmaterialien können in flüssiger oder pastöser Form appliziert und wie oben erläutert, vorzugsweise vor Aufbringen des Beschichtungssystems auf zu schützende Oberflächen ausgehärtet werden.

Besonders dekorative Oberflächen und gute Verbundhaftungen werden mit der Verwendung von Acrlyatlack, Polyurethanlack und/oder Gemischen hiervon als Überzugsmaterial erzielt.

Erfindungsgemäß bevorzugt sind strahlenhärtbare Lacke, beispielsweise Elektronenstrahl- und/oder UV-vernetzbare Lacke. Vor diesem Hintergrund werden erfindungsgemäß bevorzugt die Materialien zur Herstellung des Vliesstoffs so ausgewählt, dass sie stabil gegenüber Elektronen- und/oder UV-Strahlen sind. Vorteilhaft an der Verwendung dieser Lacke, verglichen mit wasserbasierten Lacken ist, dass hierdurch eine Quellung des Basismaterials und eine Verschlechterung von dessen Festigkeitseigenschaften durch das Wasser vermieden werden kann.

Verglichen mit Pulverlacken haben strahlenhärtbare Lacke den Vorteil, dass auch Substrate eingesetzt werden können, die nicht elektrisch leitfähig sind. Darüber hinaus ist die Temperaturbelastung des Substrats geringer.

Die Dicke des Beschichtungssystems kann in Abhängigkeit vom geplanten Einsatzgebiet variieren. Vorteilhaft ist es eine Mindestdicke von 0,01 mm bis 0,5 mm, vorzugsweise von 0,03-0,5 mm einzuhalten, um einer Durchdringung des Vliesstoffs durch das Überzugmaterial entgegenzuwirken.

Gemäß einer bevorzugten Ausführungsform der Erfindung wird das Beschichtungssystem, vorzugsweise nach Aushärtung des Überzugs, über die der Beschichtung abgewandte Seite auf einen Träger aufgebracht. Der Ausdruck Aushärtung des Überzugs wird im herkömmlichen Sinne, nämlich so verstanden, dass das Überzugsmaterial vollständig ausreagiert, beispielsweise vollständig polymerisiert ist. Die Aushärtung des Überzugs kann in Abhängigkeit von dessen Zusammensetzung auf verschiedene Arten und Weisen, beispielsweise durch Lufttrocknung, beziehungsweise Elektronenstrahl und/oder UV- und/oder IR-Bestrahlung, durchgeführt werden.

Um eine gute Verbindung zwischen Beschichtungssystem und Träger zu gewährleisten, ist es vorteilhaft, wenn diejenige Seite des Vliesstoffs, die der Beschichtung abgewandt ist, möglichst frei vom Überzugsmaterial ist. Dies kann, wie oben erläutert beispielsweise dadurch bewirkt werden, dass ein Binder gebundener oder thermisch gebundener Vliesstoff eingesetzt wird und/oder, dass der Vliesstoff mit einem Bindemittel imprägniert wird.

Gemäß einer weiteren Ausführungsform der Erfindung wird als Überzug für den Vliesstoff eine, vorzugsweise mit einer Adhäsivschicht versehene, Folie eingesetzt. Beispielsweise können (Co-) Polyester, (Co-) Polyamide, Acrylate, Polyurethane, (teilverseifte) Polyvinylacetate oder Polyolefine als Adhäsivmaterial und / oder als Folienmaterial eingesetzt werden, besonders bevorzugt wird die Folie direkt, d.h. ohne Adhäsivschicht auf den Vliesstoff aufgebracht. Dies kann beispielsweise durch Extrusionsbeschichtung erfolgen. Die Dicke der Folie beträgt vorzugsweise 5 bis 100 $\mu$m, besonders bervorzugt 10 bis 90 $\mu$m. Vorteilhaft an dieser Ausführungsform ist, dass sich die Verteilung des Adhäsivmaterials auf die mit dem Überzug versehene Vliesstoffoberfläche beschränkt, so dass die Haftung des Beschichtungssystems auf dem Träger nicht behindert wird.

Um die Haftung zwischen Beschichtungssystem und Träger zu verbessern, kann es vorteilhaft sein, wenn der Vliesstoff auf der dem Überzug abgewandten Seite mit einer Adhäsivschicht, vorzugsweise auf Basis von Polyurethan versehen wird. Dabei kann die Adhäsivschicht ihre Kleberfunktionen als thermoplastische Schicht und/oder als reaktive Schicht erfüllen und beispielsweise als Puder, Film oder Web vorliegen. Verwendet man zur Bindung der Fasern einen thermisch reaktivierbaren Binder so läßt sich diese Eigenschaft verwenden um ein selbst klebendes Beschichtungssystem herzustellen. Alternativ kann zur Faserbindung ein Binder verwendet werden, der als solcher inhärent klebend ist und damit zu einem selbstklebenden Beschichtungssystem führt.

Zum Schutz der Adhäsivschicht, kann diese mit einer ablösbaren Schutzschicht, beispielsweise aus Polyethylen und/oder Polypropylen und/oder Polyester versehen sein. Ebenfalls denkbar ist, dass der auf dem Vliesstoff aufgebrachte Überzug mit einer Schutzschicht versehen ist. Hierdurch wird ein Handling des Beschichtungssystems ohne direkten Kontakt der funktionalen Schichten ermöglicht.

Als Träger können die verschiedensten Materialien, beispielsweise Holz, Metall, PVC, und / oder GFK's und CFK's eingesetzt werden. Die Verwendung des Beschichtungssystems hat verglichen mit dem direkten Aufbringen des Überzugs auf den Träger den Vorteil, dass der Überzug bei Applikation bereits ausgehärtet vorliegen kann. Dies erleichtert das Handling der beschichteten Materialien, da beispielsweise Lack- oder Farbschichten im nicht ausgehärteten Zustand sehr empfindlich gegenüber Stößen oder Verunreinigungen sind. Ein weiterer Vorteil besteht darin, dass die Belastung der Atmosphäre mit Lösungsmitteln, die bei der Trocknung des Überzugs freigesetzt werden können, am Aufbringungsort vermieden wird.

Der Vliesstoff kann auch beschichtet mit einem selbstklebenden Binder vorliegen.

Im Folgenden wird die Erfindung anhand von Ausführungsbeispielen näher erläutert:

**Beispiel 1: Herstellung eines Vliesstoffs:**

Zur Bildung des Vlieses werden monofile und Bikomponenten- Polyolefinfasern im Gemisch in Wasser dispergiert und mit Hilfe eines Hydroformers als Blätter abgelegt. Der Flor wird mit Hilfe eines Durchlauftrockners bei 90 - 120°C in Abhängigkeit vom Schmelzbereich der Bindefasern getrocknet. Die Kalandrierung erfolgt bei 90 - 100°C und Liniendrücken von 20 - 40 N/mm.

**Beispiel 2: Herstellung eines Vliesstoffs:**

Es werden kalandrierte Stapelfaservliesstoffe aus einem Gemisch aus monofilen PET- und unverstreckten PET Fasern hergestellt. Die Faserbindung erfolgt bei gängigen Temperaturen zwischen 205 und 235°C und einem Druck von 10 bis 50 MPa.

**Beispiel 3-5: Herstellung eines Vliesstoffs:**

Der Flor der Beispiele 3-5 wird analog Beispiel 1 erstellt und abgelegt. Hierbei werden Fasermischungen aus PET und Zellstoffpulp verwendet, die zusätzlich mit einem Acrylatbinder beaufschlagt werden. Die Trocknungstemperaturen liegen bei 150 - 210°C, die Kalandrierung erfolgt bei 80 - 120°C und Liniendrücken von 160 - 200 N/mm.

**Beispiel 6: Herstellung eines Vliesstoffs:**

Die Herstellung erfolgt wie in den Beispielen 3-5 dargelegt. Statt monofilem PET wird eine Kern-Mantel Bikofaser eingesetzt, deren Mantel-Polyester einen niedrigeren Schmelzpunkt als der Kern aufweist und zum Binden der Fasern dient. Die Trocknung erfolgt bei Temperaturen von 150 - 210°C, kalandriert wird bei 185 - 215°C und einem Liniendruck von 20 - 40 N/mm.

**Beispiel 7: Herstellung eines Vliesstoffs:**

Es werden kalandrierte Stapelfaservliesstoffe aus einem Gemisch aus monofilen Viscose-Fasern und unverstreckten PET Fasern hergestellt. Die Faserbindung erfolgt bei gängigen Temperaturen zwischen 205 und 235°C und einem Druck von 10 bis 50 MPa.

**Beispiel 8: Herstellung eines Vliesstoffs:**

Es wird ein Filamentflor aus einem Polyester-Polyamid-Bikomponenten-Endlosfilament mit einem Flächengewicht von 60 g/m$^2$ erzeugt und dieser einer Wasserstrahlvernadelung mit Drücken bis 250 bar beidseitig unterzogen. Die Bikomponenten-Endlosfilamente weisen nach der Wasserstrahlvernadelung, die zu einer gleichzeitigen Splittung der Ausgangsfilamente führt, einen Titer von bis zu 0,1 dtex auf.

**Beispiel 9: Herstellung eines Vliesstoffs:**

Es wird ein Filamentflor aus einem Polyester-Copolyester-Bikomponenten-Endlosfilament mit einem Flächengewicht von 50 g/m$^2$ erzeugt und dieser mittels eines Kalanders bei 140 - 170°C und einem Liniendruck von 50 - 70 N/mm geglättet. Die finale Faserbindung erfolgt bei 190 - 220°C in einem Thermofusionsofen.

Die Oberflächenenergien der in den Beispielen eingesetzten Faserpolymere sind wie folgt:

| Polymer | OF- Energien [mN/m]: |
|---|---|
| | |
| PE | 34 |
| PP | 29 |
| PET | 42 |
| PA 6,6 | 41 |
| PA 6 | 46 |
| Cellulose (Baumwolle) | 42 |
| Cellulose (Pulp) | 42-46 |

In Tab. 1 sind charakteristische Werte der erfindungsgemäß eingesetzten Vliesstoffe dargestellt.

Tab. 1: Eigenschaftsprofil Ausführungsbeispiele

| Beispiel | Gewicht (g/m²) | Dicke [mm] | HZK MD [N/5cm] | Deh-nung MD [%] | Weiter-reißkraft MD [N] | Luftdurchlässig-keit @200 Pa [l/m²s²] | Glätte Seite 1 / Seite 2 [s] | spezi-fische OF [m²/g] | Porengrößens-panne [μm] 1. kleinste Pore 2. größte Pore 3. mean flow pore diam. | Poren-größen-verteilung smaxi-mum [μm] | Benetzung-szeit [s] H2O [s/50μl] | Schrumpf @200°C [%] | Pack-ungsdichte | Haftung |
|---|---|---|---|---|---|---|---|---|---|---|---|---|---|---|
| 1 | 50 | 0,144 | 163,3 | 23,2 | 2,63 | 580 | 10 / 10 | 0,29 | 1. 11,16 2. 51,34 3. 18,67 | 6-24 | > 600 | 70,09 | 0,377 | schlecht |
| 2 | 60 | 0,069 | 220 | 25 | 2,5 | 27 | 35/28 | 0,13 | 1. 1,27 2. 36,34 3. 8.47 | 0,1 - 26 | > 600 | 4,33 | 0,630 | schlecht |
| 3 | 40 | 0,061 | 102,9 | 9,27 | 0,98 | 238 | 119 / 116 | 0,29 | 1. 5,54 2. 69,66 3. 15,17 | 3 - 30 | 507 | 3,60 | 0,501 | gut |
| 4 | 50 | 0,082 | 118,7 | 9,88 | 1,39 | 61 | 81/84 | 0,29 | 1. 2,89 2. 37,98 3. 8,28 | 3-15 | 184 | 4,00 | 0,465 | gut |
| 5 | 60 | 0,091 | 156,4 | 6,74 | 1,25 | 38 | 87 / 76 | 0,29 | 1. 2,13 2. 35,86 3. 7,26 | 2,5-14 | 196 | 1,60 | 0,503 | gut |
| 6 | 50 | 0,091 | 76 | 5 | 0,2 | 2 | 152 / 140 | 0,58 | 1. 1,8 2. 20,6 3. 4,8 | 2 - 10 | 21 | 1,80 | 0,382 | gut |
| 7 | 50 | 0,088 | 108 | 5 | 0,49 | 33 | 122 / 83 | 0,31 | 1. 1,76 2. 32,71 3. 8,32 | 3-23 | 226 | 3,20 | 0,395 | gut |

(fortgesetzt)

| | Gewicht (g/m²) | Dicke [mm] | HZK MD [N/5cm] | Dehnung MD [%] | Weiterreißkraft MD [N] | Luftdurchlässigkeit @200 Pa [l/m²s²] | Glätte Seite 1/Seite 2 [s] | spezifische OF [m²/g] | Porengrößenspanne [µm] | Porengrößenverteilungsmaximum [µm] | Benetzungszeit [s] | Schrumpf @200°C [%] | Packungsdichte | Haftung |
|---|---|---|---|---|---|---|---|---|---|---|---|---|---|---|
| 8 | 60 | 0,348 | 160 | 42,7 | 5,3 | 310 | 7 | 0,9 | 1. 5,29 2. 25,72 3. 10,15 | 6,5 - 15 | 2 | 4,60 | 0,138 | gut |
| 9 | 50 | 0,22 | 120 | 24 | 20 | 6163 | 0,5 | 0,25 | 1. 9,75 2. 65,12 3. 17,46 | 13 - 40 | 25* | 0,89 | 0,165 | gut |

*Gemessen mit 20µl Ethylenglycol

**Beispiel 10: Lackhaftungsprüfung**

Als Lack wird ein elektronenstrahlvernetzbares Lacksystem auf Basis von Polyurethan-Acrylaten verwendet und bei einer Strahlendosis von 30-50 kGy und einer Spanung von 220 - 270 kV vernetzt.

Die Lackhaftung (MD) wird wie folgt ermittelt:

Auf die Lackbeschichtung wird ein Vliesstoff mittels Haftmasse auflaminiert (Mustergröße: DIN A4, Mikrofaser Spinn-vlies, 130 g/m$^2$ mit 25g Polycaprolacton-Haftmasse). Die Laminierung erfolgt bei 80°C und 1,4 bar über 30 Sek. Hierbei wird ein 5 cm breiter Streifen Trennpapier quer zur Längsrichtung an der Kante zwecks einfacher Separierung eingelegt. Anschließend werden Teststreifen (280mm x 50 mm) ausgestanzt. Zur Ermittlung der Haftung wird dann die Beschichtung an der Verklebungsnaht gebrochen und die Haftung nach Bedingungen der DIN 53357 bestimmt. Trennt sich im Zugversuch der Lack vom Trägervlies mit einer Trennkraft < 5N wird die Haftung für schlecht befunden, ist die Trennkraft > 5N wird die Haftung für gut befunden.

Wie in Tab. 1 dargestellt zeigen die Beispiele 1 und 2 eine unzureichende Lackhaftung. Unter Betrachtung der in Tab. 1 angegebenen Werte weist Bsp. 1 eine hinreichende Oberfläche und Porengrößenverteilung auf. Dennoch zeigt sich auf Grund des Aufbaus aus 100% hydrophoben Olefinfasern eine schlechte Haftung. Werden diese nun gegen hydrophilere Materialien (Bsp 3-5,7) ausgetauscht erzielt man eine gute Lackhaftung.

Bsp. 2 ist aus PET Fasern mit hinreichender Oberflächenenergie aber einer geringen Oberfläche bzw. mit sehr kleinen Poren aufgebaut. Steigert man hier nun die Oberflächenenergie indem zellulosische Fasern (Bsp. 8) beigemischt werden so erzielt man auch hier eine gute Lackhaftung. Eine weitere Verbesserung erreicht man dadurch, dass die Porengrößenverteilung in Richtung größerer Poren verschoben wird, bzw. die spezifische Oberfläche insgesamt erhöht wird.

**Beispiel 11: Schrumpfmessung**

Ein Muster des Vlieses wird in DIN A4 Größe genommen. Hierbei ist darauf zu achten, dass die längere Seite des Musters parallel zur Maschinenrichtung ist. Dieses wird dann 30 Sek. in einem Umluftofen bei 200°C gelagert. Der Schrumpf ergibt sich als Mittelwert aus der Maßänderung entlang beider Achsen.

Es wurde gezeigt, dass es vorteilhaft ist, wenn der eingesetzte Vliesstoff folgende Eigenschaften aufweist:

- bei seiner Herstellung werden eine ausreichende Menge an Fasern mit geringem Fasertiter eingesetzt,
- der Vliesstoff enthält hydrophile Komponenten mit einer Oberflächenenergie von mind. 35 mN/m und
- die spezifische Oberfläche des Vliesstoffs beträgt mindestens 0,15 m$^2$, gemessen nach DIN ISO 9277.

Die hohe Oberflächenenergie und hohe spezifische Oberfläche des Vliesstoffs kann wie oben beschrieben durch geeignete Auswahl der Vliesstoffkomponenten erzielt werden. Derartige Vliesstoffe ermöglichen eine guten Anhaftung von Lacken auf dem Vliesstoff.

Ferner ist vorteilhaft, wenn die Porengrößenverteilung des Vliesstoffs nach ASTM E 1294 der Art ist, dass 80-100 % der Poren einen Durchmesser von 2,5-50 $\mu$m, vorzugsweise 2,5-40 $\mu$m, insbesondere 2,5-30 $\mu$m haben. Ohne sich erfindungsgemäß auf einen Mechanismus festzulegen, wird vermutet, dass die spezielle Porengrößenverteilung wesentlich zu der guten Haftfähigkeit des Vliesstoffs beiträgt. Bei einer derartigen Porengrößenverteilung kann eine gute Benetzung des Vliesstoffs erzielt werden, welche die notwendige Eindringtiefe des Lacksystems ermöglicht, was wiederum zu einer zufrieden stellenden Lackhaftung führt. Das Zusammenspiel der vorgenannten Faktoren lässt sich beispielsweise wie oben beschrieben durch die Benetzungszeit des Vliesstoffs mit Wasser oder Ethylenglycol charakterisieren.

**Patentansprüche**

1. Verwendung eines Vliesstoffs mit einer spezifischen Oberfläche, gemessen nach DIN ISO 9277 von mindestens 0,15 m$^2$/g und einer Dicke von 10 bis 400 $\mu$m, umfassend Fasern mit einem Titer von weniger als 5 dtex in einer Menge von mindestens 30 Gewichtsprozent, bezogen auf das Gesamtgewicht des Vliesstoffs, wobei der Vliesstoff die folgenden hydrophilen Komponenten enthält:

    - Fasern mit einer Oberflächenenergie, gemessen nach DIN 55660 von > 35 mN/m, und
    - mindestens ein Bindemittel mit einer Oberflächenenergie, gemessen nach DIN 55660 von > 35 mN/m, ausgewählt aus der Gruppe der Acrylate, Vinylacrylate, Vinylacetate, Ethylenvinylacetate (EVA), Acrylnitrilbutadiene (NBR), Styrolbutadiene (SBR), Acrylnitrilbutadienstyrole (ABS), Vinylchloride, Ethylenvinylchloride, Polyvinylalkohole, Polyurethane, Stärkederivate, Zellulosederivate sowie deren Gemische und/oder Copolymere hiervon und gegebenenfalls

- mindestens einen Füllstoff mit einer Oberflächenenergie, gemessen nach DIN 55660 von > 35 mN/m

als Trägermaterial zur Beschichtung mit einem Überzug, insbesondere einer Lack-, Farbschicht und/oder einer Folie.

2. Verwendung nach Anspruch 1, **dadurch gekennzeichnet, dass** der Anteil an Fasern, insbesondere der hydrophilen Fasern, mit einem Titer von weniger als 5 dtex 40-100 Gew.%, vorzugsweise 50-100 Gew.% beträgt.

3. Verwendung nach Anspruch 1 oder 2, **dadurch gekennzeichnet, dass** die hydrophilen Fasern Zellulose-, Viskose-, Lyocel-, Polyamid-, (Co)Polyester-, aliphatische und/oder aromatische (Co)Polyamid-, Polyphenylensulfid-, Glas-, Basalt-, Polyurethan-, Polyimid-, Melaminharz-, Modacryl- und/oder Polyacrylnitrilfasern sind.

4. Verwendung nach einem oder mehreren der vorangehenden Ansprüche, **dadurch gekennzeichnet, dass** der Anteil der hydrophilen Fasern im Vliesstoff von 20 Gew.% bis 100 Ges.%, vorzugsweise von 30 Gew.% bis 80 Gew.%, bezogen auf das Gesamtgewicht des Vliesstoffs beträgt.

5. Verwendung nach einem oder mehreren der vorangehenden Ansprüche, **dadurch gekennzeichnet, dass** die hydrophilen Fasern einen Titer von 0,1 bis 5 dtex aufweisen.

6. Verwendung nach einem oder mehreren der vorangehenden Ansprüche, **dadurch gekennzeichnet, dass** die hydrophilen Fasern als Faserpulp mit einem Mahlgrad nach Schopper-Riegler von 10-60°SR, vorzugsweise 10-50°SR vorliegen.

7. Verwendung nach einem oder mehreren der vorangehenden Ansprüche, **dadurch gekennzeichnet, dass** die hydrophilen Fasern einen mittleren Faserdurchmesser, gemessen nach DIN 53811 von 0,1 bis 25 $\mu$m, vorzugsweise 1 bis 25 $\mu$m, aufweisen.

8. Verwendung nach einem oder mehreren der vorangehenden Ansprüche, **dadurch gekennzeichnet, dass** der Vliesstoff durch eine spezifische Benetzungszeit für Wasser von weniger als 20 min, vorzugsweise von weniger als 15 min charakterisiert ist.

9. Verwendung nach einem oder mehreren der vorangehenden Ansprüche, **dadurch gekennzeichnet, dass** der Vliesstoff eine Dicke von 10 bis 250 $\mu$m aufweist.

10. Verwendung nach einem oder mehreren der vorangehenden Ansprüche, **dadurch gekennzeichnet, dass** der Vliesstoff ein Nassvliesstoff ist.

11. Verwendung nach einem oder mehreren der vorangehenden Ansprüche, **dadurch gekennzeichnet, dass** die Lack- und/oder Farbschicht einen Lack, insbesondere einen Acrlyatlack, Polyurethanlack und/oder Gemische hiervon aufweist.

12. Verwendung nach einem oder mehreren der vorangehenden Ansprüche, **dadurch gekennzeichnet, dass** der beschichtete Vliesstoff auf einen Träger aufgebracht wird.

**Claims**

1. Use of a nonwoven having a specific surface area, as measured to DIN ISO 9277, of at least 0.15 m$^2$/g and a thickness of 10 to 400 $\mu$m, comprising fibres having a linear density of less than 5 dtex in an amount of at least 30 weight percent, based on the overall weight of the nonwoven, wherein the nonwoven contains the following hydrophilic components:

   - fibres having a surface energy, as measured to DIN 55660, of > 35 mN/m, and
   - at least one binder having a surface energy, as measured to DIN 55660, of > 35 mN/m, selected from the group of acrylates, vinyl acrylates, vinyl acetates, ethylene-vinyl acetates (EVA), acrylonitrile-butadienes (NBR), styrene-butadienes (SBR), acrylonitrile-butadiene-styrenes (ABS), vinyl chlorides, ethylene-vinyl chlorides, polyvinyl alcohols, polyurethanes, starch derivatives, cellulose derivatives and also their mixtures and/or copolymers thereof and optionally
- at least one filler having a surface energy, as measured to DIN 55660, of > 35 mN/m

as carrier material for coating with an overcoat, especially with a layer of varnish, a layer of paint and/or a self-supporting film/sheet.

2. Use according to Claim 1, **characterized in that** the proportion of fibres, especially of hydrophilic fibres, having a linear density of less than 5 dtex is 40-100 wt%, preferably 50-100 wt%.

3. Use according to Claim 1 or 2, **characterized in that** the hydrophilic fibres are cellulose, viscose, lyocell, polyamide, (co)polyester, aliphatic and/or aromatic copolyamide, polyphenylene sulphide, glass, basalt, polyurethane, polyimide, melamine resin, modacrylic and/or polyacrylonitrile fibres.

4. Use according to one or more of the preceding claims, **characterized in that** the proportion of hydrophilic fibres in the nonwoven is from 20 wt% to 100 wt%, preferably from 30 wt% to 80 wt%, based on the overall weight of the nonwoven.

5. Use according to one or more of the preceding claims, **characterized in that** the hydrophilic fibres have a linear density of 0.1 to 5 dtex.

6. Use according to one or more of the preceding claims, **characterized in that** the hydrophilic fibres are in the form of fibre pulp having a Schopper-Riegler freeness of 10-60°SR, preferably 10-50°SR.

7. Use according to one or more of the preceding claims, **characterized in that** the hydrophilic fibres have an average fibre diameter, as measured to DIN 53811, of 0.1 to 25 $\mu$m, preferably 1 to 25 $\mu$m.

8. Use according to one or more of the preceding claims, **characterized in that** the nonwoven is **characterized by** a specific wetting time for water of less than 20 min, preferably less than 15 min.

9. Use according to one or more of the preceding claims, **characterized in that** the nonwoven has a thickness of 10 to 250 $\mu$m.

10. Use according to one or more of the preceding claims, **characterized in that** the nonwoven is a wet-laid nonwoven.

11. Use according to one or more of the preceding claims, **characterized in that** the layer of varnish and/or paint comprises a varnish, in particular an acrylate varnish, a polyurethane varnish and/or mixtures thereof.

12. Use according to one or more of the preceding claims, **characterized in that** the coated nonwoven is applied to a carrier.

**Revendications**

1. Utilisation d'un non-tissé ayant une surface spécifique, mesurée selon DIN ISO 9277, d'au moins 0,15 m$^2$/g et une épaisseur de 10 à 400 $\mu$m, comprenant des fibres ayant un titre de moins de 5 dtex en une quantité d'au moins 30 pour cent en poids, par rapport au poids total du non-tissé, le non-tissé contenant les composants hydrophiles suivants :

- des fibres ayant une énergie superficielle, mesurée selon DIN 55660, > 35 mN/m et
- au moins un liant ayant une énergie superficielle, mesurée selon DIN 55660, > 35 mN/m, choisi dans le groupe constitué par les acrylates, les acrylates de vinyle, les acétates de vinyle, l'éthylène-acétate de vinyle (EVA), l'acrylonitrile-butadiène (NBR), le styrène-butadiène (SBR), l'acrylonitrile-butadiène-styrène (ABS), les chlorures de vinyle, les chlorures d'éthylène-vinyle, les alcools polyvinyliques, les polyuréthanes, les dérivés d'amidon, les dérivés de cellulose, ainsi que leurs mélanges et/ou leurs copolymères, et éventuellement
- au moins une charge ayant une énergie superficielle, mesurée selon DIN 55660, > 35 mN/m,

en tant que matériau support pour le revêtement avec un agent de recouvrement, notamment une couche de vernis, de peinture et/ou un film.

2. Utilisation selon la revendication 1, **caractérisée en ce que** la proportion de fibres, notamment de fibres hydrophiles, ayant un titre de moins de 5 dtex est de 40 à 100 % en poids de préférence de 50 à 100 % en poids.

3. Utilisation selon la revendication 1 ou 2, **caractérisée en ce que** les fibres hydrophiles sont des fibres de cellulose, de viscose, de lyocell, de polyamide, de (co)polyester, de (co)polyamide aliphatique et/ou aromatique, de polysulfure de phénylène, de verre, de basalte, de polyuréthane, de polyimide, de résine de mélamine, modacryliques et/ou de polyacrylonitrile.

4. Utilisation selon une ou plusieurs des revendications précédentes, **caractérisée en ce que** la proportion de fibres hydrophiles dans le non-tissé est de 20 % en poids à 100 % en poids, de préférence de 30 % en poids à 80 % en poids, par rapport au poids total du non-tissé.

5. Utilisation selon une ou plusieurs des revendications précédentes, **caractérisée en ce que** les fibres hydrophiles présentent un titre de 0,1 à 5 dtex.

6. Utilisation selon une ou plusieurs des revendications précédentes, **caractérisée en ce que** les fibres hydrophiles se présentent sous la forme d'une pâte de fibres ayant un degré de broyage selon Schopper-Riegler de 10 à 60 °SR, de préférence de 10 à 50 °SR.

7. Utilisation selon une ou plusieurs des revendications précédentes, **caractérisée en ce que** les fibres hydrophiles présentent une diamètre de fibre moyen, mesuré selon DIN 53811, de 0,1 à 25 $\mu$m, de préférence de 1 à 25 $\mu$m.

8. Utilisation selon une ou plusieurs des revendications précédentes, **caractérisée en ce que** le non-tissé est **caractérisé par** un temps de mouillage spécifique pour l'eau de moins de 20 minutes, de préférence de moins de 15 minutes.

9. Utilisation selon une ou plusieurs des revendications précédentes, **caractérisée en ce que** le non-tissé présente une épaisseur de 10 à 250 $\mu$m.

10. Utilisation selon une ou plusieurs des revendications précédentes, **caractérisée en ce que** le non-tissé est un non-tissé par voie humide.

11. Utilisation selon une ou plusieurs des revendications précédentes, **caractérisée en ce que** la couche de vernis et/ou de peinture comprend un vernis, notamment un vernis acrylate, un vernis polyuréthane et/ou des mélanges de ceux-ci.

12. Utilisation selon une ou plusieurs des revendications précédentes, **caractérisée en ce que** le non-tissé revêtu est appliqué sur un support.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012074380 A
- GB 1468506 A
- WO 9626810 A1
- WO 2009080772 A1
- WO 2012074380 A1
- EP 1365069 A2
- EP 0707977 A1